# FASCICULE DE BREVET EUROPEEN

(11) **EP 0 664 242 B1**
(45) Date de publication et mention de la délivrance du brevet: **06.08.1997**
(21) Numéro de dépôt: 95400054.3
(22) Date de dépôt: 11.01.1995
(51) Int. Cl.: B60R 9/12, B60R 9/048

(54) **Dispositif porte-objets polyvalent pour véhicules, notamment pour le transport de skis, planches de surf ou articles similaires**
Mehrzweck-Gepäckträger für Kraftfahrzeuge, insbesondere zum Transportieren von Skiern, Surfbrettern oder ähnlichem
Multi-purpose article carrier for vehicles, in particular for the transportation of skis, surfboards or similar

(30) Priorité: 21.01.1994 FR 9400647
(43) Date de publication de la demande: 26.07.1995
(73) Titulaire: AUTOMAXI INDUSTRIES, F-35400 Saint Malo (FR)
(72) Inventeur: Ravier, Jean-Marie, F-35400 Saint-Malo (FR)
(74) Mandataire: Keib, Gérard

(56) Documents cités:
- FR-A- 2 494 647
- US-A- 3 378 182
- US-A- 3 610 491
- US-A- 4 143 799
- US-A- 5 115 955

## Description

L'invention concerne un dispositif porte-objets polyvalent, plus particulièrement pour le transport de skis, de planches de surf, monoskis ou autres articles similaires, et destiné à être accroché sur des barres de toit d'un véhicule ou faisant partie intégrante de celles-ci.

Par toit, on entend dans la présente invention, le toit proprement dit d'un véhicule mais aussi toutes les zones sur lesquelles de telles barres peuvent être accrochées. Il peut s'agir, par exemple, du dessus du coffre arrière d'un véhicule automobile ou, pour les véhicules de type camionnette, de la façade arrière.

Avec l'essor des sports dits "de glisse", que ce soit à la montagne ou à la mer, les besoins en dispositifs de transport spécialisés se sont fortement accrus. De nombreux dispositifs de ce type sont connus. Il s'agit en général, soit de barres de toit spécialisées dans le transport de skis intégrant des éléments spécifiques comportant des organes fixes, soit des barres "porte-tout" sur lesquelles on vient fixer un dispositif comportant des organes spécifiques et des arceaux de fixation.

Des problèmes spécifiques sont associés au transport de ce type d'articles :
- Il est en général nécessaire d'en transporter plusieurs simultanément;
- Dans une même catégorie d'articles, par exemple les skis, ils existent plusieurs dimensions : ski d'enfants, skis d'adultes et plusieurs types : skis alpins, skis de fond, aux caractéristiques fort différentes.
- Enfin, il est apparu, ces dernières années, une variété d'autres engins utilisables pour les sports "de glisse", tels que les planches de surf ou monoskis.

Les dispositifs de transport de l'art connu comprennent essentiellement un support ou embase et un arceau, pivotant ou démontable, ainsi que des moyens élastiques exerçant une pression de maintien. Généralement, ces dispositifs présentent une position ouverte (déverrouillée) permettant l'insertion du ou des skis ou autres articles, entre l'embase et le support, et une position verrouillée pour laquelle l'article est maintenu fermement entre l'arceau et l'embase, précisément à l'aide des moyens élastiques de maintient. de façon tout à fait similaire aux dispositifs de l'art connu.

Si les dispositifs de l'art connu sont bien conçus pour le transport d'une catégorie d'articles de sport et éventuellement pour le transport simultané de plusieurs articles de la même catégorie, il est par contre nécessaire d'utiliser des organes spécialisés pour le transport d'articles de catégories différentes ou du moins les dispositifs de l'art connu sont peu adaptés pour ce type d'utilisation.

L'invention se fixe pour but principal un porte-objets polyvalent pour barres de toit de véhicule, permettant le transport simultané de plusieurs articles de sports, tels que skis, planches de surf, monoskis ou articles similaires, d'une même catégorie, et/ou le transport de plusieurs articles de sport des types précités de catégories différentes.

Pour ce faire, le dispositif de l'invention comprend, de façon tout à fait similaire aux dispositifs de l'art connu, un support ou embase et un arceau mobile, des moyens permettant de verrouiller ou déverrouiller cet arceau et des moyens élastiques exerçant une force de maintien sur les articles insérés entre l'arceau et l'embase.

Cependant, selon une caractéristique essentielle de l'invention, lesdits moyens élastiques sont agencés de telle manière que des articles de catégories différentes et/ou d'épaisseurs différentes peuvent être disposés à l'intérieur du porte-objets selon l'invention, chacun en un ou plusieurs exemplaires.

De façon plus précise le dispositif selon l'invention fait l'objet de deux modes de réalisations principaux.

Selon un premier mode de réalisation, les moyens élastiques sont rendus solidaires de l'arceau mobile et selon un second mode de réalisation, les moyens élastiques sont rendus solidaires de l'embase.

Le brevet américain US-A-5 115 955 (Michel Dallaire et al.) décrit un dispositif porte-objets conforme au préambule de la revendication 1 et 7.

L'invention a donc pour objet un dispositif porte-objets pour le transport d'objets allongés, notamment de skis, de planches de surf ou articles similaires, dispositif du type comprenant une embase présentant une face interne allongée sensiblement plane, parallèle à une première directionet au moins une paroi orthogonale à celle-ci, un arceau et des moyens élastiques disposés entre l'arceau et l'embase, l'arceau et l'embase pouvant prendre au moins deux positions relatives distinctes, l'une, dite déverrouillée, autorisant l'introduction à l'intérieur dudit dispositif d'au moins un objet à transporter et l'autre, dite verrouillée, pour laquelle les moyens élastiques immobilisent lesdits objets à transporter en exerçant une force de maintien, les moyens élastiques présentant au moins une première et une seconde position déterminées de maintien des objets à transporter, de manière à permettre le transport d'objets dont les épaisseurs cumulées sont situées dans des premières et secondes gammes d'épaisseur, dispositif dans lequel au moins un moyen élastique, supporté par ladite embase, comprend des éléments latéraux formant ressort et une partie fixe, caractérisé en ce que chaque moyen élastique supporté par l'embase comprend une partie mobile en translation solidaire desdits éléments latéraux formant ressort, la partie mobile en translation étant insérée dans ladite partie fixe, en ce que les éléments latéraux formant ressort autorisent un écrasement d'amplitude déterminée de la partie mobile, suivant une direction sensiblement orthogonale à ladite première direction, en ce que ladite partie fixe comprend deux parois solidaires de l'embase (2), en vis à vis, perpendiculaires à ladite première direction et ayant la forme d'un "V", la pointe du "V" étant tournée vers l'extérieur, les parois étant éloignées l'une de l'autre de manière à laisser un passage libre de largeur déterminée suivant la première direction, en ce que ladite partie mobile en translation comprend un plateau et une languette centrale, en ce que les éléments latéraux formant ressort sont constituées par des languettes latérales recourbées sur elle-même, en ce que les languettes latérales et centrale sont munies, en leur extrémité inférieure, d'un d'élément de guidage et sont solidaires, en leur extrémité supérieure, dudit plateau, en ce que la largeur des languettes est inférieure à ladite largeur déterminée du passage laissé libre, de manière à autoriser l'insertion des languettes entre les parois verticales et les éléments de guidage ont des dimensions supérieures à la largeur déterminée et inférieures à la distance séparant les faces internes des parois en vis à vis, de manière à pouvoir glisser le long de ces parois et assurer un guidage de la partie mobile, et en ce que l'une desdites languettes latérales exerce une force de maintien parallèlement à ladite première direction lorsqu'au moins un objet à transporter est disposé entre cette languette et ladite paroi perpendiculaire de l'embase et une force de maintien orthogonale à ladite première direction lorsqu'au moins un objet à transporter est disposé entre ledit plateau et l'arceau.

L'invention a encore pour objet un dispositif porte-objets pour le transport d'objets allongés, notamment de skis, de planches de surf ou articles similaires, dispositif du type comprenant une embase présentant une face interne allongée sensiblement plane, parallèle à une première direction et au moins une paroi orthogonale à celle-ci, un arceau et des moyens élastiques disposés entre l'arceau et l'embase, l'arceau et l'embase pouvant prendre deux positions relatives, l'une, dite déverrouillée, autorisant l'introduction à l'intérieur dudit dispositif d'au moins un objet à transporter et l'autre, dite verrouillée, pour laquelle les moyens élastiques immobilisent ledit objet à transporter en exerçant une force de maintien, les moyens élastiques présentant au moins une première et une seconde position déterminées de maintien des objets à transporter, de manière à permettre le transport d'objets dont les épaisseurs cumulées sont situées dans des premières et secondes gammes d'épaisseur, caractérisé en ce qu'il comprend au moins un moyen élastique solidaire de l'arceau et en ce que ce moyen est constitué d'un plateau attaché à l'arceau, d'un élément en matériau à propriétés élastiques ayant sensiblement la forme d'un "X" dont les extrémités des bras supérieurs sont attachés audit plateau, et les extrémités des bras inférieurs sont laissées libres et de renforts latéraux de ce premier élément ayant la forme d'un "X", ces renforts latéraux étant également en matériau à propriétés élastiques, de manière à exercer sur les objets à transporter une force de maintien comprise dans une première gamme lorsque les épaisseurs cumulées de ceux-ci sont comprises dans une première gamme d'épaisseurs, ladite force de maintien étant due à la flexion des bras inférieurs de l'élément ayant la forme d'un "X" et à exercer sur les objets à transporter une force de maintien comprise dans une seconde gamme lorsque les épaisseurs cumulées de ceux-ci sont comprises dans une seconde gamme d'épaisseurs, ladite force de maintien étant due à la déformation de l'élément ayant la forme d'un "X" et des éléments de renfort latéraux.

L'invention sera mieux comprise et d'autres caractéristiques et avantages apparaîtront à la lecture de la description qui suit en référence aux figures annexées, et parmi lesquelles :
- Les figures 1 et 2 illustre de façon schématique les deux principaux modes de réalisation du dispositif porte-objets selon l'invention;
- Les figures 3 et 4 illustre une première variante du dispositif selon l'invention, vue de côté et de dessus;
- La figure 5 illustre en perspective partielle un détail de.cette même variante de réalisation;
- Les figures 6 à 9 illustrent diverse possibilités de transport de skis, planches de surfs ou autres articles similaires;
- La figure 10 illustre en perspective la fixation de dispositifs selon l'invention sur les barres de toit d'un véhicule;
- Les figures 11 à 14 illustrent un second mode de réalisation du dispositif selon l'invention.

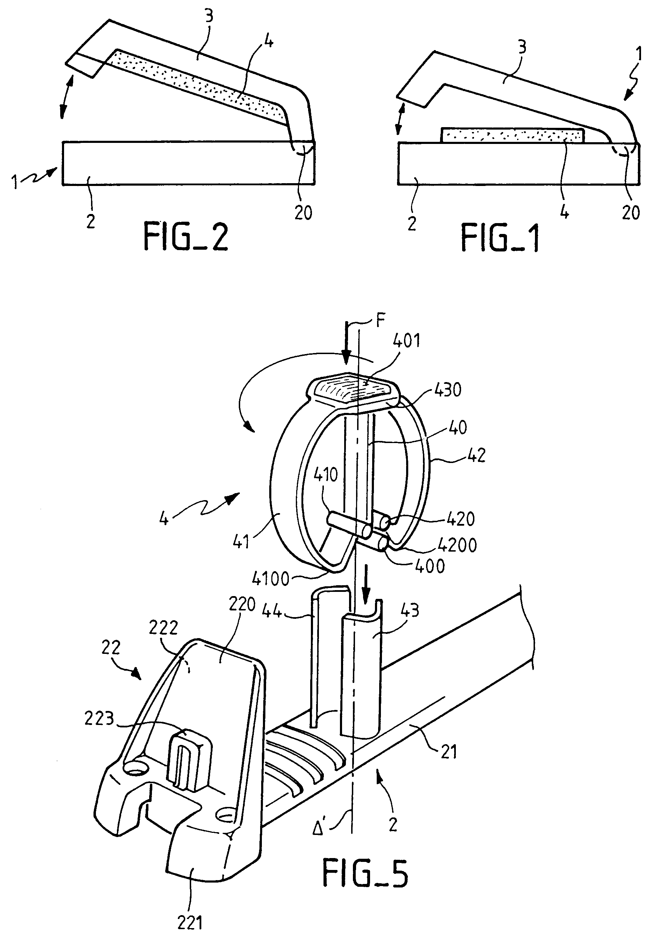

La figure 1 illustre un premier mode de réalisation du dispositif porte-objets selon l'invention, dispositif que l'on appellera dans ce qui suit porte-skis car cette dénomination est la plus usuelle. Il doit cependant être bien entendu que cette dénomination doit considérée dans un sens large qui englobe notamment le transport de planches de surf et monoskis. Conformément à ce mode de réalisation, les moyens élastiques de maintien 4, qui seront détaillés ci-après, sont rendus solidaires de l'embase ou support 2 du dispositif porte-skis 1. Le dispositif comprend en outre un arceau 3. Ce dernier est mobile, en rotation dans l'exemple illustré, autour d'un axe 20, partie intégrante du support ou embase 2. L'objet à transporter (non représenté) est introduit, de façon classique, entre l'arceau 3 et le support 2, en position déverrouillée du dispositif 1. Ensuite, on rabat (suivant la flèche sur la figure 1) l'arceau 3 et on le verrouille sur le support 2 à l'aide de tout moyen de verrouillage de l'art connu : verrou, cliquet, etc.. Les moyens élastiques exercent alors une force de maintien sur l'objet ou les objets à transporter. En raison de la configuration particulière de ces moyens élastiques 4 conformes à l'invention, cette force de maintien est adaptée de façon automatique au nombre et à la nature des objets à transporter.

La figure 2 illustre de façon schématique une seconde variante du dispositif selon l'invention. Les moyens élastiques sont rendus solidaires cette fois de l'arceau mobile 3.

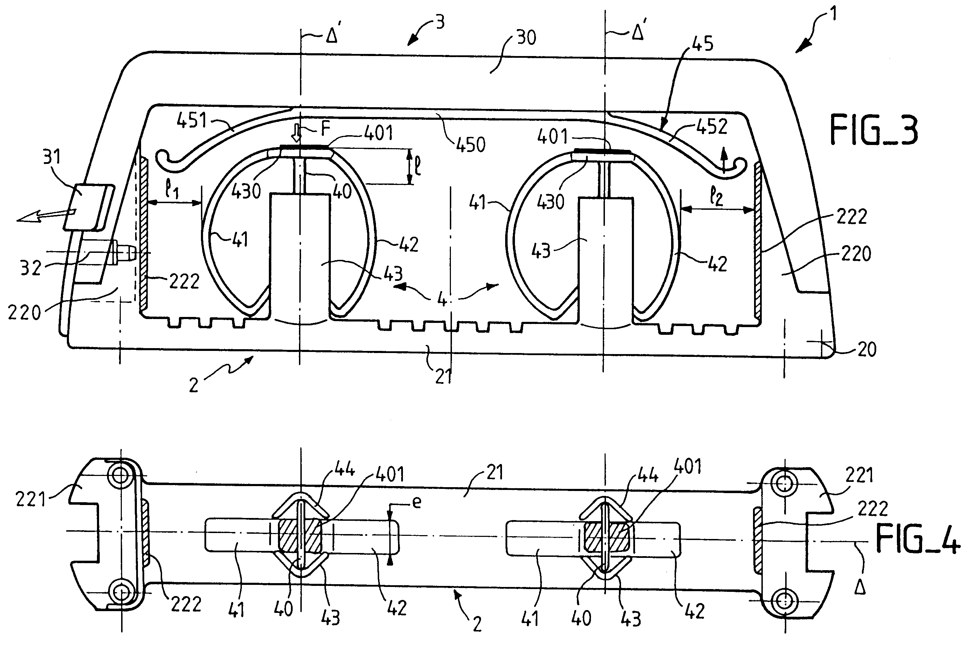

Les figures 3 à 5 illustrent de façon plus détaillée un exemple de dispositif porte-objets conforme au premier mode de réalisation selon l'invention.

Sur ces figures et les figures ultérieures, les éléments identiques ou pour le moins similaires portent les mêmes références et ne seront redécrits qu'en tant que de besoin.

Sur ces figures, on a représenté un seul élément porte-skis. Il est clair qu'en général il est nécessaire d'en disposer d'au moins deux, disposés, par exemple, l'un à l'avant, l'autre à l'arrière du toit d'une voiture automobile ou autre véhicule, et associés, chacun, à une barre de toit (non représentée sur ces figures). Le plus souvent, chacune des barres est munie de un ou plusieurs éléments.

L'embase 2 du porte-objets 1 comporte une partie horizontale 21 de forme sensiblement parallélépipèdique et deux parties latérales comprenant des parois verticales 220 et des éléments classiques 221 de fixation à une barre de toit (non représentée). Sur la face interne des parois latérales 220, on dispose avantageusement des plaquettes d'adhérence 222 couvrant tout ou partie de ces parois. Il s'agit habituellement de lamelles de caoutchouc ou d'un matériau similaire, munies de stries ou de tous reliefs adaptés à cet usage.

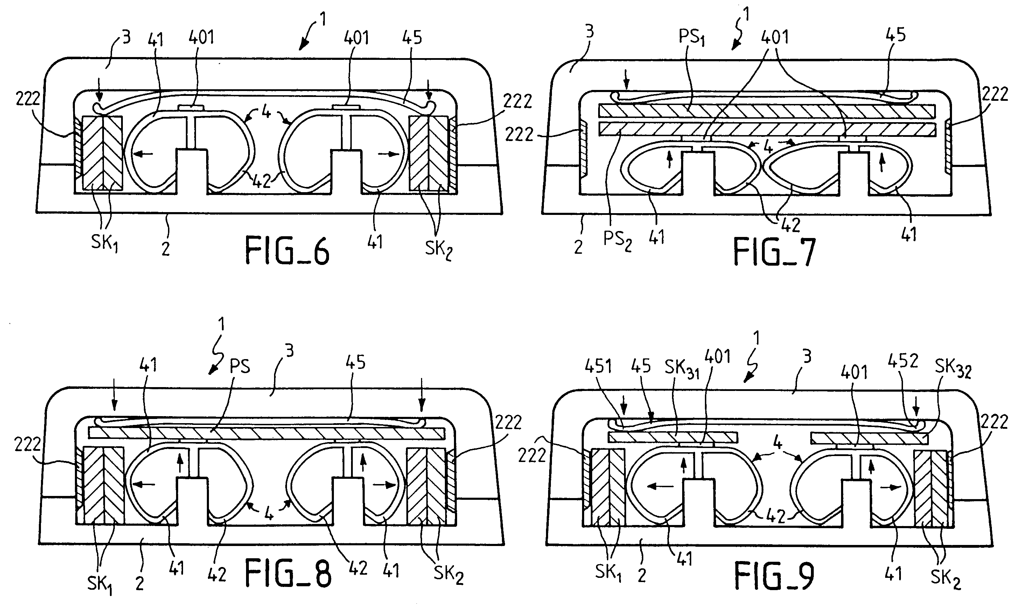

Le dispositif porte-skis comporte également un arceau mobile 3, en rotation autour d'un axe 20 dans l'exemple illustré. Cet arceau 3 pourrait être également détachable sans sortir du cadre de l'invention. Il comprend une partie courbe 30 en forme de U renversé. Sur l'une des parois, on prévoit habituellement un organe d'encliquetage 31 coopérant avec un organe homologue 223 (figure 5) situé sur l'embase 2. On peut également prévoir de façon avantageuse une serrure à clé 32.

Ces éléments sont communs à l'art connu et il est inutile de les décrire plus avant.

Les moyens élastiques 4 présentent, par contre, une configuration spécifique à l'invention.

Ils se composent essentiellement de deux parties, l'une fixe et l'autre mobile.

La partie fixe est rendue solidaire de l'embase 21. Elle comprend, dans l'exemple illustré, deux parois verticales 43 et 44 en forme de "V" ouvert, la pointe de ces "V" étant tournée vers l'extérieur. Ces deux parois définissent une enceinte ouverte laissant un passage libre suivant l'axe Δ de la plus grande longueur du dispositif 1.

La partie mobile comprend deux presseurs latéraux 41 et 42 constitués chacun d'une languette recourbée formant ressort à lame et d'une languette centrale 40. L'extrémité supérieure de ces languettes est fixée à un plateau horizontal 430. Celui-ci est muni avantageusement d'un patin d'adhérence 401 similaire aux plaquettes 222. L'extrémité inférieure de ces mêmes languettes est munie de renforts, par exemple d'éléments tubulaires, 400, 410 et 420. Les languettes sont en matériau élastique, de préférence en matériau plastique. La largeur des languettes 40, 41 et 42 est choisie telle qu'elle soit inférieure à l'écartement (passage laissé libre) entre les parois verticales 43 et 44. Cette largeur "e" peut avantageusement être commune aux trois languettes, pour le moins aux languettes latérales 41 et 42. Par contre, la longueur des renforts d'extrémité est choisie supérieure à "e", tout en restant inférieure à la distance séparant les faces internes des deux parois latérales (fonds des "V"). De ce fait, ces renforts peuvent être introduits à l'intérieur de l'espace défini par les deux parois latérales 43 et 44 et servir de guides. Enfin, la longueur de la languette verticale 40 est choisie telle que, une fois la partie mobile des moyens élastiques 4 introduite entre les parois verticales 43 et 44, celle-ci repose sur les parties inférieures recourbées 4100 et 4200 des languettes latérales 41 et 42. Cette disposition permet l'enfoncement de la languette centrale 40 lorsqu'on exerce sur le plateau 430 une pression dirigée de haut en bas (force F). La languette verticale centrale s'enfonce jusqu'au moment où le renfort 400 s'appuie sur la face supérieure de l'embase 21, autorisant ainsi un mouvement vers le bas du plateau d'amplitude maximale 1.

Comme il a été indiqué, les languettes sont en matériau à propriété élastique, au moins les languettes latérales 41 et 42. Sous l'effet de la force de compression F, la courbure de ces languettes va augmenter. En d'autres termes, la zone centrale de ces languettes 41 et 42, comprise entre le plateau 430 et les zones d'appui 4100 et 4200, va s'éloigner de l'axe vertical Δ' confondu avec la languette centrale 40. Lorsqu'on fait cesser la force F, par effet ressort, les languettes reprennent leurs positions initiales.

La force d'écrasement F est produite lorsqu'on insère entre l'arceau 3 et le plateau 430 un ski, une planche de surf ou tout autre article similaire, en un ou plusieurs exemplaires.

Dans une variante préférée de réalisation, on ajoute avantageusement un moyen élastique supplémentaire 45 se présente sous la forme d'une languette allongée. Celle-ci comporte une zone centrale plane 450 et deux ailes courbes 451 et 452 formant également ressort à lame. Ces dernières sont disposées au-dessus d'une zone couvrant sensiblement la languette 41 des moyens élastiques disposés sur la gauche de la figure 3 pour l'aile 451 et la languette 42 des moyens élastiques disposés sur la droite de la figure 3 pour l'aile 452. Cette languette 45 est avantageuse réalisée dans le même matériau que les languettes 41 et 42. Les moyens de fixation peuvent être constitués par une rainure dans laquelle s'engage la languette 45 ou tout autre moyen de fixation bien connus : vissage, etc..

Egalement, dans une variante de réalisation préférée du dispositif selon l'invention, l'une des languettes latérales, 41 dans l'exemple illustré, présente un rayon de courbure plus important que la seconde languette, 42. Il s'ensuit que les distances l₁ et l₂ séparant la paroi externe de ces languettes des plaquettes d'adhérence 222, disposées sur la face interne des parois 220, sont différentes selon que l'on considère la languette 41 ou 42. Grâce à cette disposition, on peut insérer des skis d'épaisseurs très différentes entre les languettes élastiques 41 ou 42 et les plaquettes d'adhérence 222, par exemple des skis alpins ou des skis de fond.

Comme l'ensemble constitué par les languettes 40-42 et le plateau 430 est amovible, si l'on désire introduire l'un ou l'autre de ces types de skis, il suffit de l'extraire de son logement (parois fixes 43 et 44), d'effectuer une rotation de 180° autour de l'axe Δ' comme illustré par la figure 5 et de réintroduire cet ensemble entre les parois 43 et 44. La languette 42 qui se trouvait à droite de l'axe Δ' se trouve désormais à gauche de cet axe. Il s'ensuit que la distance séparant la plaquette 222 de la languette de gauche, c'est-à-dire désormais la languette 42, devient plus importante qu'auparavant, car la relation l₁ < l₂ est vérifiée. On peut donc à volonté, par une manipulation simple, adapter le dispositif pour le transport de deux types de skis très différents.

Les figures 6 à 9 illustrent, de façon non exhaustive, diverses possibilités de transport offertes par le dispositif porte-skis dans le mode de réalisation qui vient d'être décrit.

La figure 6 illustre la possibilité de transport simultané deux paires de skis, SK₁ et SK₂, alpins et/ou de fond, selon le positionnement des moyens élastiques dans leurs logements, comme il vient d'être rappelé. Les skis, SK₁ et SK₂, ont été représentés en coupe au niveau du porte-skis 1 pour des raisons de simplicité. Dans cet exemple d'application, seules les languettes latérales 41 des moyens élastiques 4, en contact avec la paroi des skis, exercent une force de maintien sur celles-ci. Les skis, SK₁ et SK₂, sont positionnés verticalement entre les moyens élastiques 4 et les plaquettes d'adhérence 222.

La figure 7 illustre la possibilité de transport simultané de deux planches de surf, PS₁ et PS₂. Celles-ci sont disposées horizontalement entre les plaquettes d'adhérence 401 et l'arceau 3, ou plus précisément, si cet élément est présent, entre les plaquettes d'adhérence 401 et la languette élastique auxiliaire 45. Dans cette application, les languettes latérales sont écrasées et exercent une poussée verticale de maintien des planches de surf, PS₁ et PS₂.

La figure 8 illustre la possibilité de transport simultané de deux paires de skis, SK₁ et SK₂, alpins et/ou de fond, et d'une planche de surf PS. Les languettes des moyens élastiques exercent des forces latérales de maintien sur les skis, SK₁ et SK₂, et des forces verticales, dues à l'écrasement, via les plateaux 430, sur la planche de surf PS. La languette élastique 45 exerce également des forces verticales de maintien sur la planche de surf PS.

Enfin, la figure 9 illustre la possibilité de transport simultané de 3 paires de skis SK₁, SK₂, SK₃₁ et SK₃₂ ,alpins et/ou de fond. Le ski SK₃₁ de la troisième paire est disposé entre le plateau 401 des moyens élastiques sur la partie gauche de la figure 9 et l'aile 451 de la languette élastique 45, alors que le ski SK₃₂ de cette même paire de skis est disposé entre le plateau 401 des moyens élastiques sur la partie droite de la figure 9 et l'aile 452 de la languette élastique 45. Le jeu des forces est analogue à celui rencontré dans l'application illustrée par la figure 8. Plus particulièrement, chaque aile, 451 et 452, de la languette élastique 45 exerce une force de maintien vertical sur l'un des skis, respectivement SK₃₁ et SK₃₂, de la troisième paire.

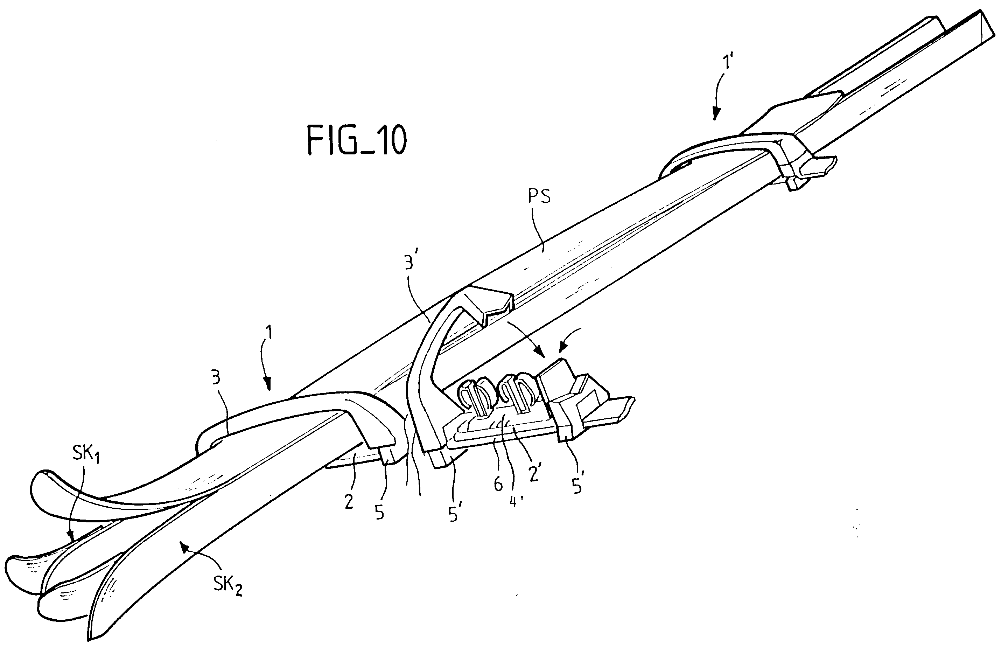

La figure 10 illustre en perspective la possibilité de transporter deux paires de skis et une planche de surf PS, comme il a été décrit en relation avec la figure 8. On a supposé dans cet exemple que deux paires de porte-skis étaient utilisés et montés sur deux barres de toit sur un véhicule (non représenté). Pour ne pas surcharger la figure, seuls trois dispositifs porte-skis ont été représentés : deux à l'avant, 1 et 1', et un à l'arrière. De plus, pour une illustration plus complète de l'invention, le dispositif 1 a été représenté en position verrouillée, c'est-à-dire l'arceau 3 refermé sur les skis SK₁et SK₂ et le surf PS à transporter. Le dispositif 1' a été représenté en position déverrouillée, arceau 3' ouvert. On aperçoit sur la figure 10 les moyens élastiques 4' disposés sur l'embase 2'.

Enfin, de façon classique, les dispositifs porte-skis sont rendus solidaires des barres de toits à l'aide de brides : brides 5 et 5' dans l'exemple illustré entourant la barre de toit 6.

Il est avantageux de doter l'extrémité des arceaux 3,3' opposée aux axes de rotation (figure 3 : 20) d'un profil en "V", avec une pointe aiguë vers l'extérieur. On dote également la paroi correspondante de l'embase 2' d'un profil complémentaire, comme illustré sur la figure 10. Cette disposition permet un positionnement plus aisé de l'arceau lorsqu'on le referme.

Pour fixer les idées, sans que cela soit limitatif de la portée de l'invention, la hauteur hors-tout des moyens élastiques est typiquement égale à 6 cm, la largeur des languettes 41, 42 ègale à 1 cm et leur épaisseur égale à 2 à 3 mm. Le matériau élastique de ces languettes et de la languette 45 sera de préférence du polyamide. Le matériau des plaquettes d'adhérence sera de préférence un élatomère

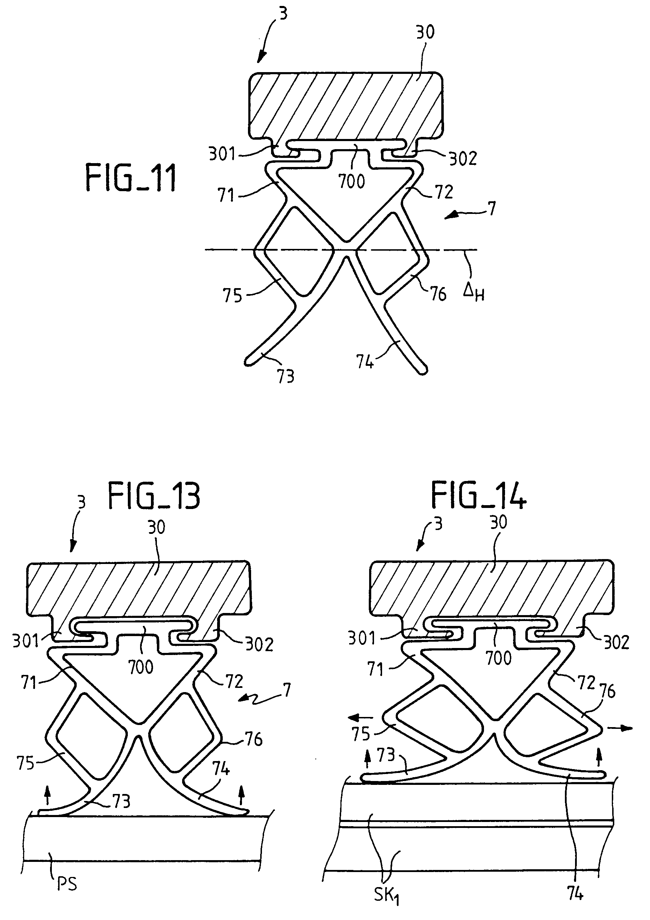

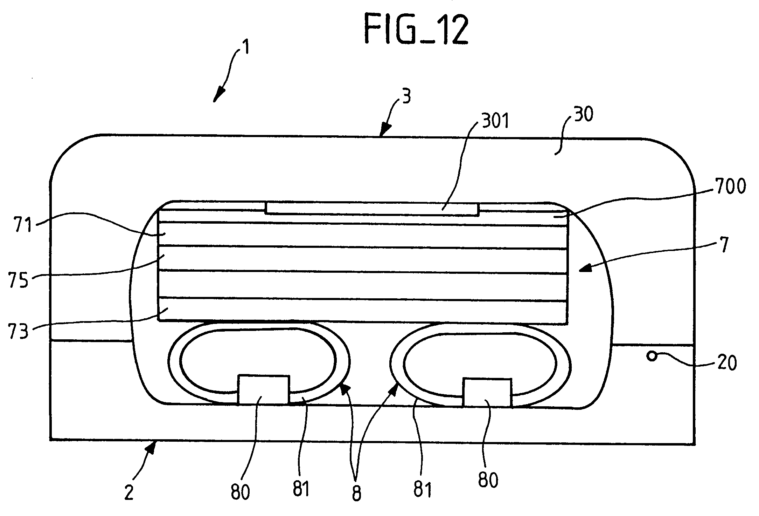

Un deuxième mode de réalisation du dispositif porte-skis selon l'invention va maintenant être décrit par référence aux figures 11 à 14.

Comme il a été illustré schématiquement par la figure 2, ce mode de réalisation diffère essentiellement du premier mode par la disposition et aussi, comme il le sera souligné ci-après, par la configuration spécifique des moyens élastiques de maintien des articles de sport à transporter : skis, planches de surf ou similaires. Les autres éléments constitutifs du dispositif selon ce mode de réalisation restent similaires à ceux déjà décrits. Il est donc inutile de les re-détailler.

La figure 11 représente une coupe partielle du dispositif, mettant en évidence la configuration des moyens élastiques principaux, spécifique à ce mode de réalisation.

Il doit tout d'abord être noté que ces moyens élastiques, référencés 7 dans ce qui suit, sont rendus solidaires de l'arceau mobile 3 et non plus de l'embase (non représentée sur cette figure).

Les moyens élastiques 7 comprennent un élément ayant la forme générale d'un "X". Les deux branches supérieures de ce "X" sont rendues solidaires d'un plateau horizontal 700 destiné lui-même à être rendu solidaire de la face inférieure de l'arceau 3 (région horizontale 30). Dans l'exemple illustré, le plateau 700 peut être inséré en force et maintenu dans des rainures 301 et 302 formées dans la paroi de l'arceau 3. Naturellement, tout autre moyen de fixation, à la portée de l'homme de métier, peut être retenu. Les branches inférieures 73 et 74 du "X" sont ouvertes vers le bas. L'ensemble est complété par deux ailes latérales 75 et 76 en forme de "V" ayant subi une rotation de 90°, les pointes vers l'extérieur. Dans l'exemple illustré, les branches du "V" sont placées symétriquement par rapport à un axe horizontal Δ_{H} passant par le centre du "X". Les branches du "X" et les parois latérales définissent une figure ayant la forme générale d'un losange.

La figure 12 illustre schématiquement en vue de côté, l'ensemble du dispositif porte-skis selon la seconde variante de réalisation. L'arceau 3 est muni d'un moyen élastique 7 et se referme sur l'embase 2, comme précédemment.

Bien que le moyen élastique 7 soit en principe suffisant pour maintenir en place les objets à transporter, il n'en est pas moins vrai que certaines catégories d'articles, tels que les planches de surf posent des problèmes spécifiques. En effet, les planches de surf sont habituellemnt munies d'attaches prohéminentes. Si on transporte deux planches, elles doivent être placées tête-bêche. Ausssi, il est nécessaire de les surélever par rapport au toit du véhicule porteur et donc également par rapport à l'embase 2. Pour ce faire, on munit le dispositif selon l'invention de moyens élastiques auxiliaires 8 solidaires de l'embase. Ces moyens élastiques 8 peuvent être fixes.

Dans l'exemple de réalisation illustré sur la figure 12, il peuvent être constitués d'un anneau en matériau à propriété élastiques 81 maintenu par un support 80.

Lorsqu'on introduit un seul article entre les moyens élastiques et les plaquettes d'adhérence, par exemple une planche de surf PS comme illustré sur la figure 13, seules les branches inférieures, 73 et 74, du "X" se soulèvent significativement (flèches sur la fgure) et exercent une pression de maintien sur ledit objet. En effet, les ailes latérales, 75 et 76, rigidifient la partie supérieure du "X" et empêchent sa déformation dans les conditions qui viennent d'être décrites.

Par contre, si on insère des objets d'épaisseur totale plus importante, par exemple une paire de skis, SK₁ et SK₂, comme illustré sur la figure 14, non seulement les banches inférieures du "X" se déforment, mais aussi la partie supérieure de celui-ci. Les losanges formés par les branches supérieures, 71 et 72, du "X" et les parois latérales de renfort, se déforment à la manière d'un pantographe. Les flèches portées sur la figure 14 illustrent les mouvements observés. La pression verticale exercée sur les skis est naturellement plus importante que dans le cas précédent, puisque à la force due à la flexion des branches inférieures s'ajoute la force due à la déformation (écrasement) desdits losanges. Lorsqu'on dépasse une première épaisseur déterminée des objets à transporter, la force de réaction (maintien) due à la déformation des losanges devient prépondérante, les bras inférieurs, 73 et 74, du "X" ne peut d'ailleurs plus se déformer significativement : ils sont alors en position sensiblement horizontale.

De façon préférentielle, le moyen élastique 7 est réalisé par extrusion et découpe à longueur voulu d'un profilé en matériau à propriétés élastiques, dont la section présente la forme illustrée sur la figure 7 ou toute forme équivalente. On entend par forme équivalente une forme telle que, en fonction de l'amplitude de l'écrasement le moyen élastique 7, celui-ci exerce des forces de réaction verticales situées dans au moins deux gammes distinctes en fonction des épaisseurs cumulées d'objets à transporter également dans deux gammes distinctes.

Pour fixer les idées, sans que cela soit limitatif en quoique ce soit de la portée de l'invention, la hauteur hors tout du profilé, base des moyens élastiques 7, est de l'ordre 56 mm, sa largeur 38 mm au niveau du bas des branches du "X" et de 30 mm au niveau du plateau 700. Le poids d'un tel profilé est typiquement de 690 g par mètre. le matériau du moyen élastique 7 sera avantageusement un élastomère à grande mémmoire de forme, de type connu dans le domaine sous le sigle EPM. Les palquettes d'adhérence pourront être réalisées dans un matériau similaire. Par contre le matériau des moyens élastiques auxiliaires 8, au moins les anneaux 81, seront réalisés de préférence dans un matériau plus rigide, par exemple du polyéthylène.

Naturellement l'invention n'est pas limitée aux exemples de réalisation précisément décrits en relation notamment avec les figures 1 à 14. En particulier, bien qu'il ait été admis implicitement que les dispositifs porte-skis étaient autonomes, en ce sens qu'ils sont destinés à être accrochés à des barres de toit ou équivalents et peuvent être démontés, et bien que cette disposition soit particulièrement intéressante car elle autorise l'emploi desdites barres à d'autres usages, ils peuvent néanmoins faire partie intégrante de barres de toits utilisées spécifiquement pour le transport de skis, planches de surf ou articles similaires. D'autre part le nombre de moyens élastiques 4 par dispositif n'est pas limité à deux. On peut munir chaque dispositif d'un seul moyen élastique ou encore de trois ou plus selon la longueur dudit dispositif.

## Revendications

1. Dispositif porte-objets (1) pour le transport d'objets allongés, notamment de skis, de planches de surf ou articles similaires, dispositif (1) du type comprenant une embase (2) présentant une face interne allongée (21) sensiblement plane, parallèle à une première direction (Δ) et au moins une paroi (220) orthogonale à celle-ci, un arceau (3) et des moyens élastiques (4) disposés entre l'arceau (3) et l'embase (2), l'arceau (3) et l'embase (2) pouvant prendre au moins deux positions relatives distinctes, l'une, dite déverrouillée, autorisant l'introduction à l'intérieur dudit dispositif (1) d'au moins un objet à transporter et l'autre, dite verrouillée, pour laquelle les moyens élastiques (4) immobilisent lesdits objets à transporter en exerçant une force de maintien, les moyens élastiques (4) présentant au moins une première et une seconde position déterminées de maintien des objets à transporter, de manière à permettre le transport d'objets dont les épaisseurs cumulées sont situées dans des premières et secondes gammes d'épaisseur, dispositif dans lequel au moins un moyen élastique (4), supporté par ladite embase (2), comprend des éléments latéraux formant ressort (41, 42) et une partie fixe (43, 44), caractérisé en ce que chaque moyen élastique (4) supporté par l'embase (2) comprend une partie mobile en translation (40, 430) solidaire desdits éléments latéraux formant ressort (41, 42), la partie mobile en translation (40, 430) étant insérée dans ladite partie fixe (43, 44), en ce que les éléments latéraux formant ressort (41, 42) autorisent un écrasement d'amplitude déterminée (*l*) de la partie mobile (40, 430), suivant une direction (Δ') sensiblement orthogonale à ladite première direction (Δ), en ce que ladite partie fixe comprend deux parois (43, 44), solidaires de l'embase (2), en vis à vis, perpendiculaires à ladite première direction (Δ) et ayant la forme d'un "V", la pointe du "V" étant tournée vers l'extérieur, les deux parois étant éloignées l'une de l'autre de manière à laisser un passage libre de largeur déterminée (e) suivant la première direction (Δ), en ce que ladite partie mobile en translation comprend un plateau (430) et une languette centrale (40), en ce que les éléments latéraux formant ressort sont constituées par des languettes latérales (41, 42) recourbées sur elle-même, en ce que les languettes latérales (41, 42) et la languette centrale (40) sont munies, en leur extrémité inférieure, d'un d'élément de guidage (400, 410, 420) et sont solidaires, en leur extrémité supérieure, dudit plateau (430), en ce que la largeur des languettes (40, 41, 42) est inférieure à ladite largeur déterminée (e) du passage laissé libre, de manière à autoriser l'insertion des languettes entre les deux parois verticales (43, 44) et les éléments de guidage (400, 410, 420) ont des dimensions supérieures à la largeur déterminée (e) et inférieures à la distance séparant les faces internes des deux parois en vis à vis (43, 44), de manière à pouvoir glisser le long de ces parois et assurer un guidage de la partie mobile (40, 430), et en ce que l'une desdites languettes latérales (41, 42) exerce une force de maintien parallèlement à ladite première direction (Δ) lorsqu'au moins un objet à transporter est disposé entre cette languette et ladite paroi perpendiculaire (220) de l'embase (2) et une force de maintien orthogonale à ladite première direction (Δ) lorsqu'au moins un objet à transporter est disposé entre ledit plateau (430) et l'arceau (3).

2. Dispositif selon la revendication 1, caractérisé en ce que, dans les moyens élastiques (4), au moins lesdits éléments latéraux formant ressort (41, 42) sont en matériau polyamide.

3. Dispositif selon la revendication 1, caractérisé en ce qu'il comprend des moyens élastiques supplémentaires (45) constitués par une languette allongée, fixée en sa partie centrale à la face interne de l'arceau (3), et en ce que les extrémités (451, 452) de cette languette (45) sont courbées vers l'intérieur du dispositif de manière à former ressort.

4. Dispositif selon la revendication 1, caractérisé en ce que la partie supérieure dudit plateau (430) et la face interne de chaque paroi (220) de l'embase (2) orthogonale à ladite première direction (Δ) sont munies d'une plaquette d'adhérence (401, 222).

5. Dispositif selon la revendication 4, caractérisé en ce que ladite plaquette d'adhérence est en matériau élastomère.

6. Dispositif selon la revendication 1, caractérisé en ce que l'une (41) desdites languettes latérales (41, 42) présente une courbure plus accentuée que la courbure de l'autre languette latérale (42) de manière à ce que le positionnement de cette languette (41) en vis à vis d'une paroi perpendiculaire (220) de l'embase (2) définisse un logement destiné au transport d'objets dont les épaisseurs cumulées se situent dans une première gamme d'épaisseurs (l₁) et à ce que le positionnement de l'autre languette (42) en vis à vis de cette paroi perpendiculaire (220) de l'embase (2) définisse un logement destiné au transport d'objets dont les épaisseurs cumulées se situent dans une seconde gamme d'épaisseurs (l₂).

7. Dispositif porte-objets (1) pour le transport d'objets allongés, notamment de skis, de planches de surf ou articles similaires, dispositif (1) du type comprenant une embase (2) présentant une face interne allongée (21) sensiblement plane, parallèle à une première direction (Δ) et au moins une paroi (220) orthogonale à celle-ci, un arceau (3) et des moyens élastiques (7) disposés entre l'arceau (3) et l'embase (2), l'arceau (3) et l'embase pouvant prendre au moins deux positions relatives distinctes, l'une, dite déverrouillée, autorisant l'introduction à l'intérieur dudit dispositif (1) d'au moins un objet à transporter et l'autre, dite verrouillée, pour laquelle les moyens élastiques (7) immobilisent lesdits objets à transporter en exerçant une force de maintien, les moyens élastiques (7) présentant au moins une première et une seconde position déterminées de maintien des objets à transporter, de manière à permettre le transport d'objets dont les épaisseurs cumulées sont situées dans des premières et secondes gammes d'épaisseur, caractérisé en ce qu'il comprend au moins un moyen élastique (7) solidaire de l'arceau (3) et en ce que ce moyen élastique est constitué d'un plateau (700) attaché à l'arceau (3), d'un élément (71, 72, 73, 74) en matériau à propriétés élastiques ayant sensiblement la forme d'un "X" dont les extrémités des bras supérieurs (71, 72) sont attachés audit plateau (700), et les extrémités des bras inférieurs (73, 74) sont laissées libres et des éléments de renfort latéraux (75, 76) de ce premier élément ayant la forme d'un "X", ces éléments de renfort latéraux étant également en matériau à propriétés élastiques, de manière à exercer sur les objets à transporter une force de maintien comprise dans une première gamme lorsque les épaisseurs cumulées de ceux-ci sont comprises dans une première gamme d'épaisseurs, ladite force de maintien étant due à la flexion des bras inférieurs (73, 74) de l'élément ayant la forme d'un "X" et à exercer sur les objets à transporter une force de maintien comprise dans une seconde gamme lorsque les épaisseurs cumulées de ceux-ci sont comprises dans une seconde gamme d'épaisseurs, ladite force de maintien étant due à la déformation de l'élément ayant la forme d'un "X" et des éléments de renfort latéraux (75, 76).

8. Dispositif selon la revendication 7, caractérisé en ce que les éléments de renfort latéraux (75, 76) ont la forme d'un "V" dont la pointe est dirigée vers l'extérieur et suivant une direction comprise dans un plan parallèle à ladite première direction (Δ), de manière à définir avec les bras (71, 72, 73, 74) de l'élément ayant la forme d'un "X" un quadrilatère, déformable lorsqu'on insère entre les moyens élastiques (7) et l'embase (2) des objets à transporter dont les épaisseurs cumulées sont comprise dans ladite seconde gamme d'épaisseur.

9. Dispositif selon l'une des revendications 7 ou 8, caractérisé en ce que le moyen élastique (7) est en élastomère.

10. Dispositif selon l'une quelconque des revendications 7 à 9, caractérisé en ce qu'il comprend en outre des moyens élastiques supplémentaires (8) fixés à l'embase (2).

11. Dispositif selon la revendication 10, caractérisé en ce que lesdits moyens élastiques supplémentaires (8) comprennent un anneau (81) en matériau à propriété élastiques.

12. Dispositif selon la revendication 11, caractérisé en ce que le matériau constituant ledit anneau (81) est du polyéthylène.

13. Dispositif selon l'une quelconque des revendications 7 à 9, caractérisé en ce que ledit moyen élastique (7) est une pièce unique réalisée par extrusion et découpe d'un profilé en matériau à propriétés élastiques.

14. Dispositif selon l'une quelconque des revendications 1 à 13, caractérisé en ce qu'il comporte des moyens d'accrochage (5, 5', 221) à une barre de toit (6) de véhicule.

## Claims

1. Carrier device (1) for transporting elongate objects, especially skis, surf boards or similar articles, the device (1) being of the type comprising a base (2) having a substantially flat elongate internal face (21) parallel to a first direction (Δ) and at least one wall (220) orthogonal to this face, a hoop (3) and elastic means (4) arranged between the hoop (3) and the base (2), it being possible for the hoop (3) and the base (2) to adopt at least two distinct relative positions, one of these, known as the unlocked position, allowing at least one object to be transported to be placed inside the said device (1) and the other position, known as the locked position, for which the elastic means (4) immobilize the said objects to be transported by exerting a holding force, the elastic means (4) having at least a first determined position and a second determined position for holding the objects to be transported so as to allow the transportation of objects the combined thicknesses of which fall into first and second thickness ranges, in which device at least one elastic means (4), supported by the said base (2), comprises lateral elements forming springs (41, 42) and a stationary part (43, 44), characterized in that each elastic means (4) supported by the base (2) comprises a part (40, 430) which can move in terms of translation and is secured to the said lateral elements forming springs (41, 42), the part (40, 430) which can move in terms of translation being inserted in the said stationary part (43, 44); in that the lateral elements forming springs (41, 42) allow the moving part (40, 430) to be squashed by a determined amount (*l*) in a direction (Δ') substantially orthogonal to the said first direction (Δ); in that the said stationary part comprises two opposing walls (43, 44) secured to the base (2), and perpendicular to the said first direction (Δ) and having the shape of a "V", the point of the "V" pointing outwards, the two walls being distant from one another so as to leave a gap of determined width (e) in the first direction (Δ); in that the said part which can move in terms of translation comprises a plate (430) and a central tongue (40); in that the lateral elements forming a spring consist of lateral tongues (41, 42) bent back on themselves; in that the lateral tongues (41, 42) and the central tongue (40) are equipped, at their lower end, with a guide element (400, 410, 420) and are secured, at their upper end, to the said plate (430); in that the width of the tongues (40, 41, 42) is less than the said determined width (e) of the gap so as to allow the tongues to be inserted between the two vertical walls (43, 44) and the guide elements (400, 410, 420) have dimensions larger than the determined width (e) and smaller than the distance separating the internal faces of the two opposing walls (43, 44) so as to be able to slide along these walls and guide the moving part (40, 430); and in that one of the said lateral tongues (41, 42) exerts a holding force parallel to the said first direction (Δ) when at least one object to be transported is arranged between this tongue and the said perpendicular wall (220) of the base (2) and a holding force orthogonal to the said first direction (Δ) when at least one object to be transported is arranged between the said plate (430) and the hoop (3).

2. Device according to Claim 1, characterized in that, in the elastic means (4), at least the said lateral elements forming springs (41, 42) are made of a polyamide.

3. Device according to Claim 1, characterized in that it comprises additional elastic means (45) consisting of an elongate tongue fixed at its central part to the internal face of the hoop (3); and in that the ends (451,452) of this tongue (45) are bent towards the inside of the device so as to form a spring.

4. Device according to Claim 1, characterized in that the upper part of the said plate (430) and the internal face of each wall (220) on the base (2) orthogonal to the said first direction (Δ) are equipped with a sticky patch (401, 222).

5. Device according to Claim 4, characterized in that the said sticky patch is made of elastomeric material.

6. Device according to Claim 1, characterized in that one (41) of the said lateral tongues (41, 42) has a more pronounced curvature than the curvature of the other lateral tongue (42) so that the positioning of this tongue (41) opposite a perpendicular wall (220) of the base (2) defines a housing intended for the transportation of objects the combined thicknesses of which fall into a first range of thicknesses (l₁) and so that the positioning of the other tongue (42) opposite this perpendicular wall (220) of the base (2) defines a housing intended for the transportation of objects the combined thicknesses of which fall into a second range of thicknesses (l₂).

7. Carrier device (1) for transporting elongate objects, especially skis, surf boards or similar articles, the device (1) being of the type comprising a base (2) having a substantially flat elongate internal face (21) parallel to a first direction (Δ) and at least one wall (220) orthogonal to this face, a hoop (3) and elastic means (7) arranged between the hoop (3) and the base (2), it being possible for the hoop (3) and the base to adopt at least two distinct relative positions, one of these, known as the unlocked position,allowing at least one object to be transported to be placed inside the said device (1) and the other position, known as the locked position, for which the elastic means (7) immobilize the said objects to be transported by exerting a holding force, the elastic means (7) having at least a first determined position and a second determined position for holding the objects to be transported so as to allow the transportation of objects the combined thicknesses of which fall into first and second thickness ranges, characterized in that it comprises at least one elastic means (7) secured to the hoop (3) and in that this elastic means consists of a plate (700), attached to the hoop (3), of an element (71, 72, 73, 74) made of a material with elastic properties having substantially the shape of an "X" the ends of the upper arms (71, 72) of which are attached to the said plate (700), and the ends of the lower arms (73, 74) of which are left free and of lateral elements (75, 76) for reinforcing this first X-shaped element, these lateral reinforcing elements also being made of material with elastic properties, so as to exert on the objects to be transported a holding force which lies within a first range when the combined thicknesses of these objects lie within a first range of thicknesses, the said holding force being due to the bending of the lower arms (73, 74) of the X-shaped element, and so as to exert on the objects to be transported a holding force which lies within a second range when the combined thicknesses of these objects lie within a second range of thicknesses, the said holding force being due to the deformation of the X-shaped element and of the lateral reinforcing elements (75, 76).

8. Device according to Claim 7, characterized in that the lateral reinforcing elements (75, 76) have the shape of a "V", the point of which points outwards in a direction which lies in a plane parallel to the said first direction (Δ) so as to define with the arms (71, 72, 73, 74) of the X-shaped element a quadrilateral that can be deformed when objects to be transported, the combined thicknesses of which lie within the said second range of thicknesses, are inserted between the elastic means (7) and the base (2).

9. Device according to one of Claims 7 and 8, characterized in that the elastic means (7) is made of elastomer.

10. Device according to any one of Claims 7 to 9, characterized in that it further comprises additional elastic means (8) fixed to the base (2).

11. Device according to Claim 10, characterized in that the said additional elastic means (8) comprise a ring (81) made of a material with elastic properties.

12. Device according to Claim 11, characterized in that the material of which the said ring (81) is made is polyethylene.

13. Device according to any one of Claims 7 to 9, characterized in that the said elastic means (7) is a single piece made by extrusion and cut from an extruded section of material with elastic properties.

14. Device according to any one of Claims 1 to 13, characterized in that it includes means (5, 5', 221) for fastening it to a vehicle roof rail (6).

## Patentansprüche

1. Gepäckträger (1) für den Transport von länglichen Gegenständen, insbesondere von Skiern, Surfbrettern oder ähnlichen Gegenständen, der Bauart mit einem Sockel (2), der eine längliche, im wesentlichen ebene Innenfläche (21) aufweist, die zu einer ersten Richtung (Δ) parallel ist, und zumindest eine zu dieser senkrechte Wand (220), mit einem Bügel (3) und elastischen Mitteln (4), die zwischen dem Bügel (3) und dem Sockel (2) angeordnet sind, wobei der Bügel (3) und der Sockel (2) zumindest zwei unterschiedliche relative Positionen einnehmen können, wobei die eine, die als entriegelt bezeichnet sei, das Einsetzen zumindest eines zu transportierenden Gegenstands ins Innere des Gepäckträgers (1) ermöglicht, und in der anderen, die als verriegelt bezeichnet sei, die elastischen Mittel (4) die genannten zu transportierenden Gegenstände festhalten, indem sie eine Haltekraft ausüben, wobei die elastischen Mittel (4) zumindest eine erste und eine zweite, bestimmte Position zum Halten der zu transportierenden Gegenstände aufweisen, um den Transport von Gegenständen zu ermöglichen, deren kumulierte Dickenabmessungen sich in ersten und zweiten Dickenbereichen befinden, wobei zumindest ein elastisches Mittel (4), das auf dem genannten Sockel (2) gehalten ist, seitliche Elemente (41, 42) aufweist, die eine Feder bilden, sowie einen feststehenden Teil (43, 44), dadurch gekennzeichnet, daß jedes elastische Mittel (4), das auf dem Sockel (2) gehalten ist, einen translatorisch beweglichen Teil (40 430) aufweist, der mit den seitlichen Elementen (41, 42), die eine Feder bilden, fest verbunden ist, wobei der translatorisch bewegliche Teil (40, 430) in den feststehenden Teil (43, 44) eingesteckt ist, daß die seitlichen Elemente (41, 42), die eine Feder bilden, ein Zusammendrücken mit einer bestimmten Amplitude (l) des beweglichen Teils (40, 430) in einer im wesentlichen zu der ersten Richtung (Δ) senkrechten Richtung (Δ') ermöglichen, daß der feststehende Teil zwei mit dem Sockel (2) fest verbundene, einander gegenüberstehende Wände (43, 44) aufweist, die senkrecht zu der ersten Richtung (Δ) sind und V-förmig angeordnet sind, wobei die Spitze des V nach außen weist und die Wände einen Abstand voneinander aufweisen, so daß ein freier Durchgang mit einer bestimmten Breite (e) in der ersten Richtung (Δ) verbleibt, daß der genannte translatorisch bewegliche Teil eine Platte (430) und eine zentrale Lasche (40) aufweist, daß die seitlichen, eine Feder bildenden Elemente aus seitlichen, umgebogenen Laschen (41, 42) bestehen, daß die seitlichen (41, 42) und die mittlere Lasche (40) an ihrem unteren Endabschnitt mit einem Führungselement (400, 410, 420) versehen sind und an ihrem oberen Endabschnitt mit der genannten Platte (430) fest verbunden sind, daß die Breite der Laschen (40, 41, 42) kleiner ist als die festgelegte Breite (e) des frei verbleibenden Durchgangs, so daß das Einsetzen der Laschen zwischen die senkrechten Wände (43, 44) möglich ist, wobei die Führungselemente (400, 410, 420) Abmessungen aufweisen, die größer sind als die festgelegte Breite (e) und kleiner als der Abstand, der die Innenflächen der einander gegenüberstehenden Wände (43, 44) voneinander trennt, so daß ein Gleiten des beweglichen Teils (40, 430) an diesen Wänden entlang möglich ist und dessen Führung gewährleistet ist, daß eine der seitlichen Laschen (41, 42) eine Haltekraft parallel zu der genannten ersten Richtung (Δ) ausübt, wenn sich zumindest ein zu transportierender Gegenstand zwischen dieser Lasche und der zu dem Sockel (2) senkrechten Wand (220) befindet, und eine zu der ersten Richtung (Δ) senkrechte Haltekraft, wenn sich zumindest ein zu transportierender Gegenstand zwischen der Platte (430) und dem Bügel (3) befindet.

2. Vorrichtung nach Anspruch 1, dadurch gekennzeichnet, daß die elastischen Mittel (4), zumindest die genannten seitlichen Elemente, die eine Feder (41, 42) bilden, aus Polyamid bestehen.

3. Vorrichtung nach Anspruch 1, dadurch gekennzeichnet, daß zusätzliche elastische Mittel (45) vorhanden sind, die durch eine längliche Lasche gebildet werden, welche in ihrem mittleren Abschnitt an der Innenseite des Bügels (3) gehalten ist, wobei die Endabschnitte (451, 452) dieser Lasche (45) zum Inneren der Vorrichtung hin gekrümmt sind, um eine Feder zu bilden.

4. Vorrichtung nach Anspruch 1, dadurch gekennzeichnet, daß der obere Teil der genannten Platte (430) und die Innenseite einer jeden Wand (220) des Sockels, die zu der genannten ersten Richtung (Δ) senkrecht ist, mit einem Haftplättchen (401, 222) versehen ist.

5. Vorrichtung nach Anspruch 4, dadurch gekennzeichnet, daß das Haftplättchen aus einem Elastomermaterial besteht.

6. Vorrichtung nach Anspruch 1, dadurch gekennzeichnet, daß eine (41) der seitlichen Laschen (41, 42) eine stärkere Krümmung als die andere seitliche Lasche (42) aufweist, so daß die Positionierung dieser Lasche (41) gegenüber einer senkrechten Wand (220) des Sockels (2) einen Aufnahmeraum bildet, der zum Transport von Gegenständen bestimmt ist, deren kumulierte Dicken in einem ersten Dickenbereich (l₁) liegen, und daß die Positionierung der anderen Lasche (42) gegenüber dieser senkrechten Wand (220) des Sockels (2) einen Aufnahmeraum festlegt, der zum Transport von Gegenständen bestimmt ist, deren kumulierte Dicken in einem zweiten Dickenbereich (l₂) liegen.

7. Gepäckträger (1) für den Transport von länglichen Gegenständen, insbesondere von Skiern, Surfbrettern oder ähnlichen Gegenständen, der Bauart mit einem Sockel (2), der eine längliche, im wesentlichen ebene Innenfläche (21) aufweist, die zu einer ersten Richtung (Δ) parallel ist, und zumindest eine zu dieser senkrechte Wand (220), mit einem Bügel (3) und elastischen Mitteln (7), die zwischen dem Bügel (3) und dem Sockel (2) angeordnet sind, wobei der Bügel und der Sockel zumindest zwei unterschiedliche relative Positionen einnehmen können, wobei die eine, die als entriegelt bezeichnet sei, das Einsetzen zumindest eines zu transportierenden Gegenstands ins Innere des Gepäckträgers (1) ermöglicht, und in der anderen, die als verriegelt bezeichnet sei, die elastischen Mittel (7) die genannten zu transportierenden Gegenstände festhalten, indem sie eine Haltekraft ausüben, wobei die elastischen Mittel (7) zumindest eine erste und eine zweite, bestimmte Position zum Halten der zu transportierenden Gegenstände aufweisen, um den Transport von Gegenständen zu ermöglichen, deren kumulierte Dickenabmessungen sich in ersten und zweiten Dickenbereichen befinden, dadurch gekennzeichnet, daß er zumindest ein elastisches Mittel (7) aufweist, das mit dem Bügel (3) fest verbunden ist, und daß dieses elastische Mittel aus einer an dem Bügel (3) befestigten Platte (700) besteht, aus einem Element (71, 72, 73, 74) aus einem Material mit elastischen Eigenschaften, das im wesentlichen X-förmig ist, wobei die Endabschnitte von dessen oberen Armen (71, 72) an der genannten Platte (700) befestigt sind und die Endabschnitte von dessen unteren Armen (73, 74) frei sind, und aus seitlichen Verstärkungselementen (75, 76) dieses ersten, X-förmigen Elements, wobei die seitlichen Verstärkungselemente ebenfalls aus einem Material mit elastischen Eigenschaften bestehen, so daß auf die zu transportierenden Gegenstände eine in einem ersten Bereich enthaltene Haltekraft ausgeübt wird, wenn sich die kumulierten Dicken der Gegenstände innerhalb eines ersten Dickenbereichs befinden, wobei die genannte Haltekraft auf die Durchbiegung der unteren Arme (73, 74) des X-förmigen Elements zurückgeht, und wobei auf die zu transportierenden Gegenstände eine in einem zweiten Bereich enthaltene Haltekraft ausgeübt wird, wenn sich die kumulierten Dicken der Gegenstände innerhalb eines zweiten Dickenbereichs befinden, wobei die genannte Haltekraft auf die Verformung des X-förmigen Elements und der seitlichen Verstärkungselemente (75, 76) zurückgeht.

8. Vorrichtung nach Anspruch 7, dadurch gekennzeichnet, daß die seitlichen Verstärkungselemente (75, 76) die Form eines "V" aufweisen, dessen Spitze in einer Richtung, die in einer zu der ersten Richtung (Δ) parallelen Ebene liegt, nach außen weist, so daß mit den Armen (71, 72, 73, 74) des X-förmigen Elements ein Viereck gebildet wird, welches verformbar ist, wenn zwischen die elastischen Mittel (7) und den Sockel (2) zu transportierende Gegenstände eingelegt werden, deren kumulierte Dicken sich in dem genannten zweiten Dickenbereich befinden.

9. Vorrichtung nach einem der Ansprüche 7 oder 8, dadurch gekennzeichnet, daß das elastische Mittel (7) aus einem Elastomer besteht.

10. Vorrichtung nach einem der Ansprüche 7 bis 9, dadurch gekennzeichnet, daß zusätzliche elastische Mittel (8) vorhanden sind, die an dem Sockel (2) befestigt sind.

11. Vorrichtung nach Anspruch 10, dadurch gekennzeichnet, daß die genannten zusätzlichen elastischen Mittel (8) einen Ring (81) aus einem Material mit elastischen Eigenschaften aufweisen.

12. Vorrichtung nach Anspruch 11, dadurch gekennzeichnet, daß das Material, aus dem der Ring (81) besteht, Polyethylen ist.

13. Vorrichtung nach einem der Ansprüche 7 bis 9, dadurch gekennzeichnet, daß das genannte elastische Mittel (7) ein einstückiges Teil ist, das durch Extrusion hergestellt ist und aus einem Profil aus einem Material mit elastischen Eigenschaften geschnitten ist.

14. Vorrichtung nach einem der Ansprüche 1 bis 13, gekennzeichnet durch Mittel zum Befestigen (5, 5', 221) an einer Dachschiene (6) eines Fahrzeugs.
